# EUROPÄISCHE PATENTANMELDUNG

(11) **EP 2 597 396 A1**
(43) Veröffentlichungstag der Anmeldung: **29.05.2013**
(21) Anmeldenummer: 11190109.6
(22) Anmeldetag: 22.11.2011
(51) Int. Cl.: F24J 2/36, F24J 2/46, F24J 2/50

(54) **Transportables solarthermisches Kleinkraftwerk**

(71) Anmelder: Solardirekt Nederland BV, 9503 GD Stadskanaal (NL)
(72) Erfinder: Brinkmann, Manfred, 48431 Rheine (DE); Haase, Peer, 48429 Rheine (DE)
(74) Vertreter: Berkenbrink, Kai-Oliver

(57) **Zusammenfassung**

Gegenstand der Erfindung ist ein transportables solarthermisches Kleinkraftwerk mit folgenden Merkmalen:
Transportables solarthermisches Kleinkraftwerk mit folgenden Merkmalen:
einer Sonnenkollektortafel (3) zur Umwandlung von Sonnenlicht in Wärme, umfassend eine erste Kunststoffplatte (9) und eine zweite Kunststoffplatte (11), die derart beabstandet zur ersten Kunststoffplatte (9) angeordnet ist, dass ein Freiraum (15) zwischen der ersten und zweiten Kunststoffplatte ausgebildet ist, und Mitteln zur Leitung eines Fluides (19), die in dem Freiraum (15) zwischen der ersten und zweiten Kunststoffplatte angeordnet sind; einem Aufstellmittel (5) zur Aufstellung der Sonnenkollektortafel auf einem Untergrund, umfassend eine dritte Kunststoffplatte (25), die derart klappbar an der Sonnenkollektortafel (3) angeordnet ist, dass sie in eine erste Position klappbar ist, in der das Kleinkraftwerk im wesentlichen flach ausgebildet ist, und dass sie in eine zweite Position klappbar ist, in der sie derart von der Sonnenkollektortafel (3) weggeklappt ist, dass die Sonnenkollektortafel (3) bei Aufstellung auf einem Untergrund in einer schrägen Stellung zum Untergrund auf der dritten Kunststoffplatte (25) abstützbar ist.

## Beschreibung

Die Erfindung betrifft ein transportables solarthermisches Kleinkraftwerk.

Solarthermische Kraftwerke dienen zur Umwandlung von Sonnenlicht in Wärme. Hierzu wird in einem solarthermischen Kraftwerk die Energie des Sonnenlichts an ein Wärmeträgermedium übergeben. Ein solches Wärmeträgermedium kann insbesondere ein Fluid sein. Die von dem Fluid, beispielsweise Flüssigkeit oder Gas, aufgenommene Wärme kann anschließend aus dem solarthermischen Kraftwerk ausgeleitet und beispielsweise zu Heizzwecken verwendet werden.

Eine zentrale Komponente eines solarthermischen Kraftwerkes sind Sonnenkollektoren, in denen das Sonnenlicht in Wärme umgewandelt wird. Verbreitet sind heutzutage insbesondere Flachkollektoren, Vakuum-Flachkollektoren und Vakuum-Röhrenkollektoren. Entsprechende Sonnenkollektoren sind verhältnismäßig teuer und können auf Grund ihrer Größe und ihres Gewichts in der Regel nur fest installiert verwendet werden. Außerdem sind solche Sonnenkollektoren verhältnismäßig empfindlich.

Für bestimmte Anwendungen können jedoch Sonnenkollektoren gewünscht sein, die kostengünstiger, unempfindlicher und insbesondere auch einfacher transportierbarer sind. Der Vorteil solcher Sonnenkollektoren bestünde insbesondere darin, dass diese schnell und einfach an unterschiedliche Einsatzorte transportierbar und dort einfach zur Errichtung eines solarthermischen Kleinkraftwerkes verwendbar wären. Entsprechende Sonnenkollektoren könnten beispielsweise auf Campingplätzen verwendet werden.

Neben den zuvor genannten Sonnenkollektoren sind sogenannte Schwimmbadabsorber bekannt. Dabei handelt es sich um einfach gestaltete Sonnenkollektoren, die aus in Matten eingelagerten Schläuchen bestehen, durch die Schwimmbadwasser geleitet wird. Entsprechende Schwimmbadabsorber werden auf Dächern oder sonstigen Freiflächen eines Schwimmbades ausgelegt, so dass das durch die Schläuche strömende Schwimmbadwasser durch das Sonnenlicht erwärmt wird. Nachteilig an Schwimmbadabsorbern ist insbesondere ihr geringer Absorptionsgrad.

Der Erfindung liegt die Aufgabe zu Grunde, ein kostengünstiges, unempfindliches sowie einfach zu handhabendes und zu transportierendes solarthermisches Kleinkraftwerk zur Erfügung zu stellen, mit dem sich gute Absorptionsgrade erzielen lassen.

Zur Lösung dieser Aufgabe wird erfindungsgemäß zur Verfügung gestellt ein transportables solarthermisches Kleinkraftwerk mit folgenden Merkmalen:
- einer Sonnenkollektortafel zur Umwandlung von Sonnenlicht in Wärme, umfassend eine erste Kunststoffplatte und eine zweite Kunststoffplatte, die derart beabstandet zur ersten Kunststoffplatte angeordnet ist, dass ein Freiraum zwischen der ersten und zweiten Kunststoffplatte ausgebildet ist, und Mitteln zur Leitung eines Fluides, die in dem Freiraum zwischen der ersten und zweiten Kunststoffplatte angeordnet sind;
- einem Aufstellmittel zur Aufstellung der Sonnenkollektortafel auf einem Untergrund, umfassend eine dritte Kunststoffplatte, die derart klappbar an der Sonnenkollektortafel angeordnet ist, dass sie in eine erste Position klappbar ist, in der das Kleinkraftwerk im wesentlichen flach ausgebildet ist, und dass sie in eine zweite Position klappbar ist, in der sie derart von der Sonnenkollektortafel (3) weggeklappt ist, dass die Sonnenkollektortafel (3) bei Aufstellung auf einem Untergrund (U) in einer schrägen Stellung zum Untergrund (U) auf der dritten Kunststoffplatte (25) abstützbar ist.

Die Sonnenkollektortafel des erfindungsgemäßen Kleinkraftwerkes erfüllt die Funktion eines Sonnenkollektors. Dabei kann die Sonnenkollektortafel ebenso wie das Aufstellmittel des erfindungsgemäßen Kleinkraftwerkes vollständig oder zumindest weitgehend aus Kunststoff gefertigt sein. Dies hat insbesondere den Vorteil, dass das erfindungsgemäße solarthermische Kleinkraftwerk sehr kostengünstig herstellbar ist und darüber hinaus nur ein geringes Gewicht aufweist, so dass das erfindungsgemäße Kleinkraftwerk einfach zu handhaben und zu transportieren ist. Ferner ist das erfindungsgemäße Kleinkraftwerk besonders einfach aufgebaut, so dass es verhältnismäßig unempfindlich ist. Schließlich lassen sich mit dem erfindungsgemäßen Kleinkraftwerk gute Absorptionsgrade erzielen, wenn die Sonnenkollektortafel mittels des Aufstellmittels schräg zum Untergrund aufgestellt wird.

Zur Errichtung des erfindungsgemäßen solarthermischen Kleinkraftwerkes muss die Kunststoffplatte des Aufstellmittels, die hierin als dritte Kunststoffplatte bezeichnet wird, nur in die zweite Position geklappt werden und die Sonnenkollektortafel anschließend auf einem Untergrund aufgestellt werden, wobei sie sich in einer schrägen Stellung zum Untergrund auf der dritten Kunststoffplatte abstützt. Das erfindungsgemäße solarthermische Kleinkraftwerk ist anschließend bereits fertig errichtet. Um durch das erfindungsgemäße Kleinkraftwerk Sonnenlicht in Wärme umzuwandeln, wird ein Wärmeträgermedium in Form eines Fluides, insbesondere beispielsweise Wasser, durch die Mittel zur Leitung eines Fluides geleitet. Dieses Fluid wärmt sich durch die Bestrahlung der Sonnenkollektortafel mit Sonnenlicht auf und kann anschließend wieder aus den Mitteln zur Leitung eines Fluides ausgeleitet werden.

Um das erfindungsgemäße solarthermische Kleinkraftwerk zu transportieren, wird die dritte Kunststoffplatte in die erste Position geklappt, so dass das erfindungsgemäße Kleinkraftwerk in dieser Position der dritten Kunststoffplatte im wesentlichen flach ausgebildet ist. Der besondere Vorteil dieser flachen Ausbildung des Kleinkraftwerkes liegt insbesondere darin, dass das Kleinkraftwerk bei einer flachen und damit bei einer kompakten, nicht raumgreifenden Ausbildung einfach zu handhaben und zu transportieren ist, sowie dass es die Stapelung mit weiteren erfindungsgemäß gestalteten Kleinkraftwerken erlaub.

Die Sonnenkollektortafel des erfindungsgemäßen Kleinkraftwerkes dient zur Umwandlung von Sonnenlicht in Wärme und kann im Wesentlichen nach Art eines Flachkollektors gestaltet sein. Dabei ist die Sonnenkollektortafel des Kleinkraftwerkes jedoch besonders einfach und damit auch besonders robust aufgebaut. Ein weiterer besonderer Vorteil der Sonnenkollektortafel besteht auch darin, dass diese vollständig oder zumindest weitgehend aus Kunststoff ausgebildet sein kann, so dass die Sonnenkollektortafel besonders kostengünstig und leicht hergestellt werden kann. Nach einer Ausführungsform ist vorgesehen, dass die Sonnenkollektortafel vollständig aus Kunststoff erstellt ist.

Die Sonnenkollektortafel ist bevorzugt in Form einer flachen, geschlossenen Kassette beziehungsweise nach Art eines flachen Kastens ausgebildet. Der Vorteil einer geschlossenen Sonnenkollektortafel besteht insbesondere darin, dass die geschlossene Bauweise besser gegen ein ungewünschtes Ausleiten von Wärme, insbesondere über Konvektion, geschützt ist.

Die erste und zweite Kunststoffplatte der Sonnenkollektortafel bilden die beiden Hauptoberflächen, also die beiden großen Oberflächen der Sonnenkollektortafel.

Zur Ausbildung einer geschlossenen Sonnenkollektortafel beziehungsweise zur Ausbildung eines Kastens, ist der zwischen der ersten und zweiten Kunststoffplatte ausgebildete Freiraum randseitig geschlossen, bevorzugt durch Kunststoffplatten. Diese Kunststoffplatten können bevorzugt mit der ersten und zweiten Kunststoffplatte verklebt oder verschweißt sein. Die erste und zweite Kunststoffplatte sind bevorzugt rechteckig ausgebildet, so dass die Sonnenkollektortafel insgesamt ebenfalls eine rechteckige Form beziehungsweise die Form einer flachen, rechteckigen Platte aufweist.

Die Größe der Sonnenkollektortafel ist grundsätzlich beliebig. Beispielsweise kann die Sonnenkollektortafel verhältnismäßig klein ausgebildet sein, um sie besonders einfach transportieren zu können. Beispielsweise können die Seitenkanten der Sonnenkollektortafel jeweils eine Länge im Bereich von 300 bis 500 mm aufweisen. Ein erfindungsgemäßes Kleinkraftwerk mit einer entsprechend klein dimensionierten Sonnenkollektortafel kann beispielsweise für einen Campingurlaub verwendbar sein. Beispielsweise kann die Sonnenkollektortafel des erfindungsgemäßen Kleinkraftwerkes jedoch auch deutlich größer dimensioniert sein und beispielsweise Seitenkanten mit einer Länge im Bereich von 500 bis 2.000 mm aufweisen. Erfindungemäße solarthermische Kleinkraftwerke mit entsprechend groß dimensionierten Sannenkollektortafeln eignen sich beispielsweise auch Für den Hausgebrauch. Insgesamt kann die Sonnenkollektortafel des Kleinkraftwerkes demnach beispielsweise Seitenkanten mit einer Länge im Bereich von 300 bis 2.000 mm aufweisen.

Auf Grund ihres sehr einfachen Aufbaus kann die Sonnenkollektortafel sehr dünn dimensioniert sein. Beispielsweise kann die Sonnenkollektortafel nur eine Dicke von höchstens 30 mm aufweisen, also beispielsweise auch eine Dicke von höchstens 25 mm, 20 mm oder auch von höchstens 15 mm. Um eine ausreichende Festigkeit zu gewährleisten, kann beispielsweise vorgesehen sein, dass die Sonnenkollektortafel eine Dicke von wenigstens 10 mm aufweist, also beispielsweise auch eine Dicke von wenigstens 15 mm. Demnach kann die Dicke der Sonnenkollektortafel beispielsweise im Bereich von 10 bis 30 mm liegen.

Die erste und zweite Kunststoffplatte, die die beiden Hauptoberflächen der Sonnenkollektortafel bilden, können jeweils beispielsweise eine Dicke im Bereich von 5 bis 15 mm aufweisen. Bevorzugt bestehen die erste und zweite Kunststoffplatte aus einem thermoplastischen Kunststoff. Ein solcher Kunststoff ist leicht und kann kostengünstig zur Verfügung gestellt werden. Besonders bevorzugt sind die erste und zweite Kunststoffplatte aus Polypropylen (PP) ausgebildet.

Nach einer bevorzugten Ausführungsform ist vorgesehen, dass die erste und zweite Kunststoffplatte über Abstandhalter miteinander verbunden sind. Diese Abstandhalter dienen zur Versteifung der Sonnenkollektortafel. Ferner lassen sich die erste und zweite Kunststoffplatte über die Abstandhalter mit einem festen Abstand zueinander anordnen. Die Abstandhalter sind bevorzugt im Bereich zwischen der ersten und zweiten Kunststoffplatte angeordnet. Beispielsweise können die erste und zweite Kunststoffplatte über Abstandhalter in Form von Stegen, Säulen oder dergleichen Mittel miteinander verbunden sein. Die Abstandhalter sind derart beabstandet zueinander angeordnet, dass zwischen diesen die Mittel zur Leitung eines Fluides ausgebildet beziehungsweise angeordnet sind. Die Abstandhalter bestehen bevorzugt ebenfalls aus Kunststoff, besonders bevorzugt aus dem Kunststoff, aus dem die erste und zweite Kunststoffplatte ausgebildet sind, also insbesondere beispielsweise Polypropylen. Die Abstandhalter sind bevorzugt mit der ersten und zweiten Kunststoffplatte verklebt oder verschweißt beziehungsweise laminiert.

Die Abstandhalter sind bevorzugt im gesamten Bereich zwischen der ersten und zweiten Kunststoffplatte angeordnet, bevorzugt gleichmäßig verteilt, so dass die Sonnenkollektortafel über ihre gesamte Fläche hinweg durch die Abstandhalter versteift ist. Nach einer Ausführungsform ist vorgesehen, dass die Abstände zwischen benachbarten Abstandhalter nicht über 100 mm liegen, also beispielsweise auch nicht über 70 mm, 50 mm oder 30 mm. Ferner kann vorgesehen sein, dass der Abstand zwischen benachbarten Abstandhaltern wenigstens 20 mm beträgt, so dass zwischen benachbarten Abstandhaltern die Mittel zur Leitung eines Fluides ausgebildet beziehungsweise angeordnet sein können.

Eine Sonnenkollektortafel mit Abstandhaltern kann beispielsweise nach Art eines Sandwichelementes ausgebildet sein, bei dem die erste und zweite Kunststoffplatte die Deckschichten und die Abstandshalter das Kernmaterial des Sandwichelementes bilden. Der zwischen der ersten und zweiten Kunststoffplatte ausgebildete Freiraum kann beispielsweise eine Höhe, also eine lichte Weite, im Bereich von 5 bis 15 mm aufweisen. Im Bereich dieser Dicke können im Freiraum Mittel zur Leitung von Fluid ausgebildet beziehungsweise angeordnet sein, in denen ein Wärmeträgerfluid auf Grund der geringen Höhe des Freiraumes schnell aufwärmbar ist, wobei die Höhe noch ausreichend groß ist, um dem Fluid keinen zu hohen Strömungswiderstand zu bieten.

Eine Sonnenkollektortafel mit wie vorstehend dimensionierten Kunststoffplatten und Abstandhaltern kann besonders leichtgewichtig und gleichzeitig dennoch sehr biegesteif und fest ausgebildet sein.

Nach einer Ausführungsform ist vorgesehen, dass zumindest die Kunststoffplatte der Sonnenkollektortafel, die der Sonne zugewandt ist, wenn die Sonnenkollektortafel mittels der dritten Kunststoffplatte schräg auf einem Untergrund aufgestellt ist, aus seinem transparenten beziehungsweise transmittierenden Kunststoff ausgebildet ist. Hierdurch kann das Sonnenlicht seine Energie besonders gut an die Mittel zur Leitung eines Fluides im Freiraum der Sonnenkollektortafel abgeben.

Die Mittel zur Leitung eines Fluides sind derart ausgebildet, dass durch diese ein Fluid, das als Wärmeträgerfluid wirkt, leitbar ist. Bevorzugt sind die Mittel zur Leitung eines Fluides zur Durchleitung von Wasser als Wärmeträgerfluid ausgebildet.

Die Mittel zur Leitung von Fluid weisen bevorzugt wenigstens einen Fluideinlass und bevorzugt wenigstens einen Fluidauslass auf. Durch den Fluideinlass wird das Wärmeträgerfluid in die Mittel zur Leitung eines Fluides eingelassen, so dass es sich durch Sonneneinstrahlung erwärmen kann, wenn es durch das im Freiraum der Sonnenkollektortafel ausgebildete beziehungsweise angeordnete Mittel zur Leitung von Fluid strömt. Nachdem sich das Wärmeträgerfluid entsprechend aufgewärmt hat, kann es aus dem Fluidauslass wieder aus dem Mittel zur Leitung von Fluid ausgelassen und anschließend auf beliebige Art und Weise verwendet werden, beispielsweise zu Heizzwecken oder als heißes Wasser für die Speisezubereitung.

Der Fluideinlass und der Fluidauslass können beispielsweise jeweils einen Stutzen aufweisen, der über die Sonnenkollektortafel hinaussteht, um hierdurch leichter Fluidzuleitungen und Fluidableitungen an die Mittel zur Leitung von Fluid anschließen zu können.

Die Mittel zur Leitung von Fluid können beispielsweise als Röhrenabsorber ausgebildet sein.

Nach einer Ausführungsform ist vorgesehen, dass die Mittel zur Leitung von Fluid gleichzeitig als Abstandhalter ausgebildet sind. In diesem Fall erfüllen die Mittel zur Leitung von Fluid gleichzeitig zwei Funktionen. Zum einen dienen sie zur Durchleitung von Wärmeträgerfluid durch die Sonnenkollektortafel. Zum anderen dienen sie dazu, die Sonnenkollektortafel zu versteifen und die erste und zweite Kunststoffplatte zu verbinden und gleichzeitig auf Abstand zu halten. Eine solche Sonnenkollektortafel ist besonders einfach, leichtgewichtig, robust und kostengünstig herstellbar.

Nach einer besonders bevorzugten Ausführungsform sind Mittel zur Leitung von Fluid in Form wenigstens eines Schlauches vorgesehen.

Besonders bevorzugt können Mittel zur Leitung eines Fluides in Form eines Kunststoffschlauches vorgesehen sein. Ein solcher Kunststoffschlauch kann wiederum sehr kostengünstig und leichtgewichtig zur Verfügung gestellt werden.

Ein Mittel zur Leitung eines Fluides in Form eines Schlauches kann bevorzugt über den ganzen Freiraum zwischen der ersten und zweiten Kunststoffplatte hinweg angeordnet sein, so dass der Schlauch mit einer großen Länge in der Sonnenkollektortafel angeordnet sein kann und hierdurch viel Wärmeträgerfluid in der Sonnenkollektortafel aufgeheizt werden kann. Ein Schlauch kann beispielsweise mäanderförmig oder zickzack-förmig im Freiraum angeordnet sein.

Ein Mittel zur Leitung eines Fluides in Form eines Schlauches kann beispielsweise in den Freiraum eingeklebt oder mit der ersten und zweiten Kunststoffplatte verschweißt sein.

Wie vorstehend ausgeführt, kann die Sonnenkollektortafel vollständig oder zumindest weitgehend aus Kunststoff ausgebildet sein.

Auch das Aufstellmittel, über das die Sonnenkollektortafel schräg auf einem Untergrund aufstellbar ist, kann bevorzugt vollständig oder weitgehend aus Kunststoff ausgebildet sein.

Die dritte Kunststoffplatte des Aufstellmittels ist bevorzugt aus dem Kunststoff ausgebildet, aus dem die erste und zweite Kunststoffplatte der Sonnenkollektorplatte ausgebildet sind, also bevorzugt ebenfalls aus einem thermoplastischen Kunststoff, besonders bevorzugt aus Polypropylen.

Die dritte Kunststoffplatte des Aufstellmittels ist klappbar, also schwenkbar an der Sonnenkollektortafel angeordnet und in wenigstens zwei Positionen klappbar beziehungsweise schwenkbar.

In der ersten Position, in die die dritte Kunststoffplatte klappbar ist, ist das Kleinkraftwerk im wesentlichen flach ausgebildet. Besonders bevorzugt verlaufen in der ersten Position der dritten Kunststoffplatte die Ebene, in der sich die dritte Kunststoffplatte erstreckt und die Ebene, in der sich die Sonnenkollektortafel erstreckt, ganz oder im wesentlichen parallel zueinander. Besonders bevorzugt erstreckt sich die dritte Kunststoffplatte in der ersten Position ganz oder im wesentlichen in der Ebene, in der sich die Sonnenkollektortafel erstreckt. Mit anderen Worten: Die Ebene, in der sich die Sonnenkollektortafel erstreckt und die Ebene, in der sich die dritte Kunststoffplatte erstreckt, liegen aufeinander oder - bevorzugt gering - versetzt zueinander und mit keinem oder nur einem geringen Winkel zueinander. Das erfindungsgemäße Kleinkraftwerk ist in der ersten Position der dritten Kunststoffplatte damit stapelbar, insbesondere mit weiteren erfindungsgemäß ausgebildeten Kleinkraftwerken. Ferner lässt sich das erfindungsgemäße Kleinkraftwerk in der ersten Position der dritten Kunststoffplatte aufgrund der dann flachen Ausbildung des Kleinkraftwerk gut handhaben und transportieren.

In der ersten Position kann die dritte Kunststoffplatte beispielsweise in einem Winkel von etwa 180 ° von der Sonnenkollektortafel weggeklappt sein oder derart zur Sonnenkollektortafel hingeklappt sein, dass die dritte Kunststoffplatte unmittelbar benachbart zur Sonnenkollektortafel verläuft und beispielsweise auch an dieser anliegt.

Beispielsweise kann in der ersten Position der dritten Kunststoffplatte vorgesehen sein, dass die Ebene, in der sich die dritte Kunststoffplatte erstreckt, und die Ebene, in der sich die Sonnenkollektortafel erstreckt, parallel oder in einem Winkel von nur wenigen Grad schräg zueinander verlaufen, wenn die dritte Kunststoffplattein die erste Position geklappt ist. Beispielsweise kann dieser Winkel nicht mehr als 20 ° betragen, also beispielsweise auch nicht mehr als 15 °, 10 ° oder 5 °. Indem sich die dritte Kunststoffplatte in der ersten Position entsprechend im wesentlichen in der Ebene der Sonnenkollektortafel erstreckt, sind die Sonnenkollektortafel und die dritte Kunststoffplatte besonders kompakt angeordnet, so dass sie hierdurch besonders leicht transportierbar und stapelbar sind.

Soweit die dritte Kunststoffplatte in die zweite Position geklappt ist, ist sie von der Sonnenkollektortafel weggeklappt, so dass die Ebene, in der sich die dritte Kunststoffplatte erstreckt, schräg zur Ebene, in der die Sonnenkollektortafel verläuft, erstreckt. Insbesondere wird, soweit sich die dritte Kunststoffplatte in der zweiten Position befindet, zwischen der Ebene, in der sich die dritte Kunststoffplatte erstreckt, und der Ebene, in der sich die Sonnenkollektortafel erstreckt, ein Winkel angeschlossen, der über dem Winkel liegt, der zwischen den Ebenen der dritten Kunststoffplatte und der Sonnenkollektortafel in der ersten Position der dritten Kunststoffplatte eingeschlossen wird. Indem die dritte Kunststoffplatte in der zweiten Position von der Sonnenkollektortafel weggeklappt ist, ist die Sonnenkollektortafel bei Aufstellung auf einem Untergrund derart auf der dritten Kunststoffplatte abstützbar, dass sie in einer schrägen Stellung zum Untergrund auf diesem aufstellbar ist. Die dritte Kunststoffplatte dient in der zweiten Position also als Aufstellmittel beziehungsweise als Stütze für die Sonnenkollektortafel, über die die Sonnenkollektortafel schräg auf einem Untergrund abstützbar ist.

Soweit hierin ausgeführt ist, dass die Sonnenkollektortafel "schräg" auf einem Untergrund aufstellbar ist, bedeutet dies, dass sie in einem Winkel > 0° und < 90° zur Horizontalen verläuft. Hierdurch kann die Sonnenkollektortafel jeweils in einem optimalen Winkel zur Sonne ausgerichtet sein. Bevorzugt ist das Aufstellmittel derart ausgebildet, dass die Sonnenkollektortafel in einem Winkel zwischen 20° und 70° zum Untergrund über das Aufstellmittel auf dem Untergrund aufstellbar ist, wenn sich die dritte Kunststoffplatte in der zweiten Position befindet.

Je nach Dimensionierung der Sonnenkollektortafel und der dritten Kunststoffplatte kann vorgesehen sein, dass zwischen den Ebenen der Sonnenkollektortafel und der dritten Kunststoffplatte, wenn sich diese in der zweiten Position befindet, ein Winkel von wenigstens 30°, also beispielsweise auch von wenigstens 40° oder 50° und ein Winkel von höchstens 120°, also beispielsweise auch höchstens 90°, 70° oder 60° eingeschlossen wird. Besonders bevorzugt wird zwischen den Ebenen der Sonnenkollektortafel und der dritten Kunststoffplatte ein Winkel von 40° bis 70° eingeschlossen, wenn sich die dritte Kunststoffplatte in der zweiten Position befindet.

Bevorzugt ist vorgesehen, dass die dritte Kunststoffplatte fest mit der Sonnenkollektortafel verbunden ist. Ein besonderer Vorteil einer festen Verbindung zwischen der dritten Kunststoffplatte und der Sonnenkollektortafel besteht insbesondere darin, dass die Kunststoffplatte unverlierbar mit der Sonnenkollektortafel verbunden ist, so dass das erfindungsgemäße solarthermische Kleinkraftwerk besonders einfach transportiert, aufgebaut und abgebaut werden kann. Nach einer bevorzugten Ausführungsform sind die dritte Kunststoffplatte und die Sonnenkollektortafel über ein Scharnier, besonders bevorzugt über ein Folienscharnier schwenkbar beziehungsweise klappbar fest miteinander verbunden. Besonders bevorzugt sind die dritte Kunststoffplatte und die Sonnenkollektortafel unter Ausbildung eines Folienscharniers miteinander verschweißt.

Nach einer bevorzugten Ausführungsform ist vorgesehen, dass die dritte Kunststoffplatte des Aufstellmittels im Bereich einer Seitenkante der Sonnenkollektortafel an dieser angeordnet ist.

Nach einer besonders bevorzugten Ausführungsform ist vorgesehen, dass die dritte Kunststoffplatte in der zweiten Position feststellbar ist. Die dritte Kunststoffplatte ist demnach in der zweiten Position in einer definierten Stellung zur Sonnenkollektortafel halterbar. Hierdurch ist die Sonnenkollektortafel in einer definierten schrägen Stellung zum Untergrund auf diesem aufstellbar. Nach einer Fortbildung dieses Erfindungsgedankens ist vorgesehen, dass die dritte Kunststoffplatte in mehreren zweiten Positionen feststellbar ist. In diesen zweiten Positionen ist die dritte Kunststoffplatte jeweils in einem anderen Winkel von der Sonnenkollektortafel weggeklappt, so dass die Sonnenkollektortafel in verschiedenen schrägen Stellungen zu einem Untergrund auf diesem aufstellbar ist. Hierdurch kann die für die Sonneneinstrahlung auf die Sonnenkollektortafel jeweils günstigste Stellung der Sonnenkollektortafel gewählt werden.

Nach einer weiteren Ausführungsform kann vorgesehen sein, dass die dritte Kunststoffplatte in der ersten Position feststellbar ist. Dies ist insbesondere bei einem Transport des erfindungsgemäßen Kleinkraftwerkes vorteilhaft.

Zur Feststellung der dritten Kunststoffplatte in der ersten und zweiten Position können Feststellmittel vorgesehen sein, beispielsweise

Abstandhalter, Bügel oder Klammern. Über diese Feststellmittel können die Sonnenkollektortafel und die dritte Kunststoffplatte lösbar miteinander verbindbar sein.

Bevorzugt ist das erfindungsgemäße Kleinkraftwerk derart ausgebildet, dass es mit weiteren erfindungsgemäß ausgebildeten Kleinkraftwerken stapelbar ist, wenn die dritte Kunststoffplatte in die ersten Position geklappt ist. Eine solche Stapelbarkeit erfindungsgemäßer solarthermischer Kleinkraftwerke hat den Vorteil, dass mehrere Kleinkraftwerke platzsparend transportierbar sind.

Besonders vorteilhaft für die Stapelbarkeit erfindungsgemäßer Kleinkraftwerke ist dabei insbesondere auch, dass die dritte Kunststoffplatte in der ersten Position als Transportschutz wirken kann, wenn diese an die Sonnenkollektortafel angeklappt ist, wenn sie in die erste Position geklappt ist. Damit lassen sich erfindungsgemäße Kleinkraftwerke derart aufeinander stapeln, dass zwischen Sonnenkollektortafeln jeweils eine dritte Kunststoffplatte angeordnet ist, so dass die Sonnenkollektortafeln bei einer Stapelung mehrerer erfindungsgemäßer Kleinkraftwerke beidseitig je von einer dritten Kunststoffplatte abgedeckt und damit geschützt sind.

Nach einer bevorzugten Ausführungsform umfasst das erfindungsgemäße Kleinkraftwerk ferner eine Bodenplatte, die auf einen Untergrund auflegbar ist und auf der die Sonnekollektortafel und das Aufstellmittel aufstellbar sind, wenn die dritte Kunststoffplatte in die zweite Position geklappt ist.

Die Bodenplatte ist ebenfalls bevorzugt als Kunststoffplatte ausgebildet und besteht bevorzugt aus dem Kunststoff, aus dem die erste und zweite Kunststoffplatte ausgebildet sind, also bevorzugt aus einem thermoplastischen Kunststoff, besonders bevorzugt aus Polypropylen.

Bevorzugt ist die Bodenplatte klappbar sowohl an der Sonnenkollektortafel als auch an der dritten Kunststoffplatte angeordnet. Besonders bevorzugt ist die Bodenplatte derart klappbar an der Sonnenkollektortafel und an der dritten Kunststoffplatte angeordnet, dass die Sonnenkollektortafel und die dritte Kunststoffplatte auf der Bodenplatte aufstellbar sind, wenn die dritte Kunststoffplatte in die zweite Position geklappt ist, und dass sie sich im wesentlichen in der Ebene der Sonnenkollektortafel und der dritten Kunststoffplatte erstreckt, wenn die dritte Kunststoffplatte in die erste Position geklappt ist. Ferner ist die Bodenplatte bevorzugt derart ausgebildet, dass sie auf einem Untergrund auflegbar ist, wenn die dritte Kunststoffplatte in die zweite Position geklappt ist. Die Bodenplatte kann damit insbesondere zwei Funktionen erfüllen. Zum einen dient sie als Bodenplatte, auf der die Sonnenkollektortafel und die dritte Kunststoffplatte aufstellbar sind, wenn die dritte Kunststoffplatte in die zweite Position geklappt ist. Zum zweiten dient die Bodenplatte dabei gleichzeitig als Feststellmittel, über das die Sonnenkollektortafel und die dritte Kunststoffplatte in einer definierten Schrägstellung zueinander feststellbar sind.

Bevorzugt ist die Bodenplatte fest an der Sonnenkollektortafel und der dritten Kunststoffplatte angeordnet. Besonders bevorzugt ist die Bodenplatte jeweils an einer Seitenkante der Sonnenkollektortafel und der dritten Kunststoffplatte angeordnet. Insbesondere kann vorgesehen sein, dass die Bodenplatte an der Seitenkante der Sonnenkollektortafel angeordnet ist, die der Seitenkante der Sonnenkollektortafel gegenüberliegt, an der die dritte Kunststoffplatte an der Sonnenkollektortafel angeordnet ist. Ferner kann vorgesehen sein, dass die Bodenplatte an der Seitenkante der dritten Kunststoffplatte angeordnet ist, die der Seitenkante der dritten Kunststoffplatte gegenüberliegt, an der die dritte Kunststoffplatte an der Sonnenkollektortafel angeordnet ist.

Besonders bevorzugt ist die Bodenplatte jeweils unter Ausbildung eines Folienscharniers mit der Sonnenkollektortafel und der dritten Kunststoffplatte verschweißt. Hierdurch ist eine besonders feste Verbindung zwischen Sonnenkollektortafel, Bodenplatte und dritter Kunststoffplatte ausbildbar.

Bevorzugt weist die Bodenplatte eine Knickkante auf, die ein Zusammenklappen der Bodenplatte erlaubt. Hierdurch ist es möglich, dass die Bodenplatte gleichzeitig schwenkbar an der Sonnenkollektortafel und an der dritten Kunststoffplatte angeordnet ist und dennoch gleichzeitig klappbar ist.

Bevorzugt sind die erste Kunststoffplatte, die zweite Kunststoffplatte, die dritte Kunststoffplatte und die Bodenplatte als Kunststoffstrukturkammerplatten ausgebildet.

Kunststoffstrukturkammerplatten sind besonders einfach und kostengünstig herstellbar und weisen gleichzeitig eine hohe Festigkeit auf.

Kunststoffstrukturkammerplatten bestehen aus zwei ebenen Kunststoffdeckschichten, zwischen denen eine strukturierte Kunststoffmittelschicht angeordnet ist. Die Kunststoffmittelschicht kann beispielsweise genoppt oder profiliert ausgebildet sein. In ihrem Aufbau ähneln Kunststoffstrukturkammerplatten damit dem Aufbau von Wellpappe. Kunststoffstrukturkammerplatten zeichnen sich durch eine sehr hohe Festigkeit, insbesondere eine hohe Biegesteifigkeit, bei einem gleichzeitig verhältnismäßig geringen Gewicht auf. Erfindungsgemäß hat sich herausgestellt, dass sich entsprechende Kunststoffstrukturkammerplatten hervorragen zur Erstellung der Kunststoffplatten sowie der Bodenplatte des erfindungsgemäßen Kleinkraftwerkes eignen. Für das erfindungsgemäße Kleinkraftwerk können Kunststoffstrukturkammerplatten bevorzugt eine Dicke im Bereich von 5 mm bis 15 mm aufweisen. Das Flächengewicht der Kunststaffstrulcturkammerplatten kann bevorzugt im Bereich von 1.000 bis 2.500 g/m³, besonders bevorzugt in einem Bereich von 1.000 bis 2.000 g/m³ liegen.

Indem das erfindungsgemäße solarthermische Kleinkraftwerk vollständig oder weitgehend aus Kunststoffelementen erstellbar ist, kann es ein verhältnismäßig geringes Gewicht aufweisen, so dass es besonders einfach transportierbar ist. Beispielsweise kann das erfindungsgemäße Kleinkraftwerk nur ein Gewicht von maximal 15 kg aufweisen, also beispielsweise auch von höchstens 10 kg. Beispielsweise kann das Kleinkraftwerk ein Gewicht in Bereich von 1 bis 15 kg aufweisen, also beispielsweise auch im Bereich von 2 bis 10 kg oder im Bereich von 4 bis 10 kg.

Es kann vorgesehen sein, dass der Anteil an Kunststoff am erfindungsgemäßen Kleinkraftwerk wenigstens 90 %, also beispielsweise auch wenigstens 95 % des Masseanteils des Kleinkraftwerkes beträgt.

Weitere Merkmale des erfindungsgemäßen Kleinkraftwerkes ergeben sich aus den Figuren sowie der zugehörigen Figurenbeschreibung.

Sämtliche Merkmale des erfindungsgemäßen Kleinkraftwerkes können, einzeln oder in Kombination, beliebig miteinander kombiniert sein.

Ein Ausführungsbeispiel eines erfindungsgemäßen Kleinkraftwerkes wird anhand der nachfolgenden Figurenbeschreibung näher erläutert.

Dabei zeigt, jeweils stark schematisiert,
- Figur 1: ein Kleinkraftwerk in einer perspektivischen Ansicht schräg von der Seite in einer aufgeklappten Stellung,
- Figur 2: das Kleinkraftwerk nach Figur 1 von der Seite,
- Figur 3: das Kleinkraftwerk nach Figur 1 von der Seite, jedoch in einer zusammengeklappten Stellung,
- Figur 4: eine Schnittansicht der Sonnenkollektortafel des Kleinkraftwerkes nach Figur 1 entlang einer Schnittlinie A-A nach Figur 1 sowie
- Figur 5: eine Aufsicht auf die Sonnenkollektortafel des Kleinkraftwerkes nach Figur 1 mit entfernter erster Kunststoffplatte.

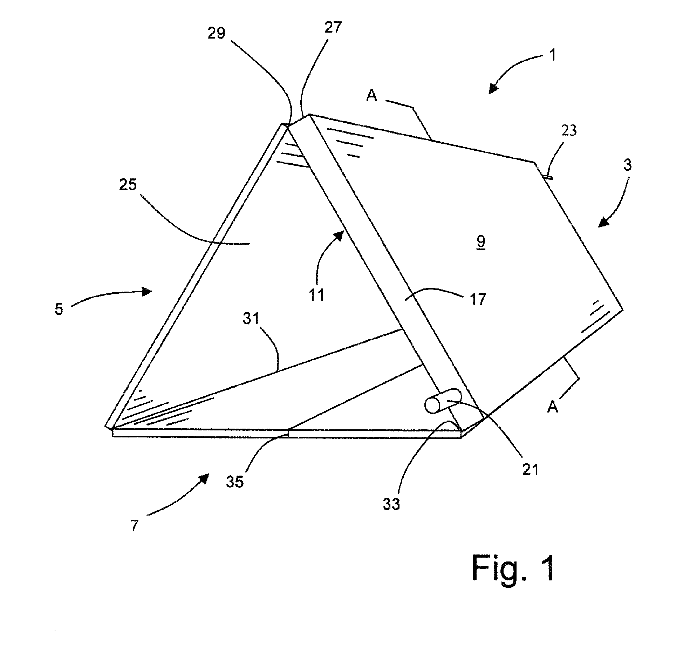

Das in Figur 1 in seiner Gesamtheit mit dem Bezugszeichen 1 gekennzeichnete, transportable solarthermische Kleinkraftwerk umfasst eine Sonnenkollektortafel 3, Aufstellmittel 5 sowie eine Bodenplatte 7.

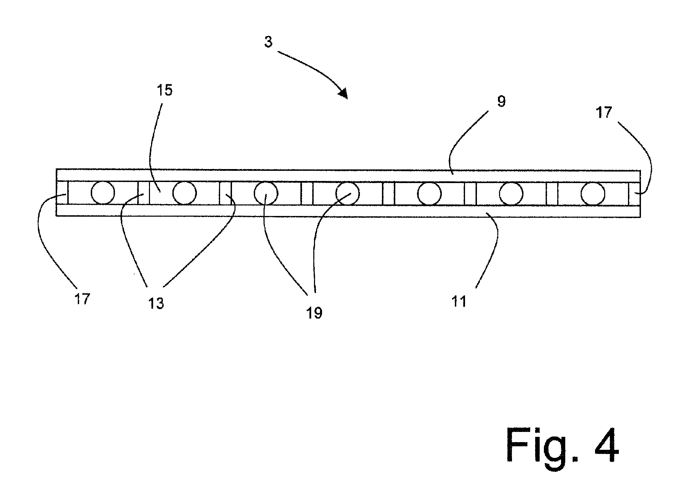

Die Sonnenkollektortafel 3 weist eine rechteckige erste Kunststoffplatte 9 und eine rechteckige zweite Kunststoffplatte 11 auf, die parallel und beabstandet zueinander angeordnet sind. Die erste und zweite Kunststoffplatte 9, 11 sind über säulenförmige Abstandhalter 13 aus Kunststoff (siehe Figur 4), die mit der ersten und zweiten Kunststoffplatte 9, 11 jeweils verschweißt sind, in einem definierten Abstand miteinander verbunden. Hierdurch ist ein Freiraum 15 zwischen der ersten und zweiten Kunststoffplatte 9, 11 ausgebildet, der randseitig der Sonnenkollektortafel 3 durch Kunststoffplatten 17, die mit der ersten und zweiten Kunststoffplatte 9, 11 jeweils verschweißt sind, verschlossen ist.

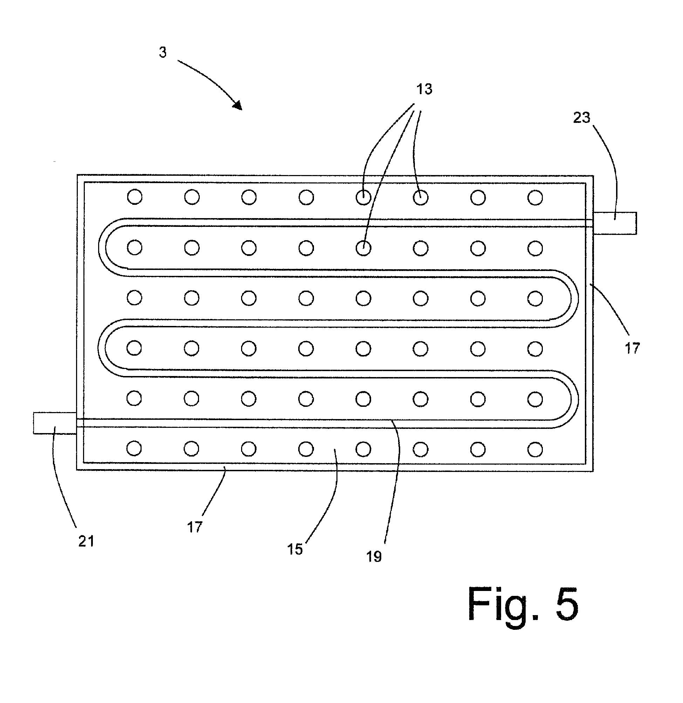

Figur 5, die eine Aufsicht auf die Sonnenkollektortafel 3 mit entfernter erster Kunststoffplatte 9 darstellt, zeigt den inneren Aufbau der Sonnenkollektortafel 3. In dem Freiraum 15 zwischen der ersten und zweiten Kunststoffplatte 9, 11 sind Mittel zur Leitung eines Fluides in Form eines Kunststoffschlauches 19 angeordnet. Der Schlauch 19 ist zur Durchleitung eines Wärmeträgerfluides in Form von Wasser ausgebildet und mäanderförmig in dem Freiraum 15 verlegt. Zur Einleitung von Fluid in den Schlauch 19 ist dieser mit einem ersten Stutzen 21 und zur Ausleitung von Fluid mit einem zweiten Stutzen 23 verbunden, wobei diese Stutzen 21, 23 jeweils über die Seitenkante der Sonnenkollektortafel 3 hinausstehen. Wie Figur 5 zeigt, ist der Kunststoffschlauch 19 über die gesamte Fläche der Sonnenkollektortafel 3 hinweg verlegt.

Das Aufstellmittel 5 umfasst eine dritte Kunststoffplatte 25, die an einer Seitenkante 27 der Sonnenkollektortafel über ein Folienscharnier 29 klappbar an der Sonnenkollektortafel 3 angeordnet ist. Die Grundfläche der dritten Kunststoffplatte 25 ist kongruent zu der Grundfläche der ersten und zweiten Kunststoffplatte 9, 11.

Die Bodenplatte 7 ist über ein Folienscharnier 31 schwenkbar mit einer Seitenkante der dritten Kunststoffplatte 25 und über ein weiteres Folienscharnier 33 schwenkbar mit einer Seitenkante der Sonnenkollektortafel 3 klappbar verbunden. Die Seitenkante, an der die Bodenplatte 7 mit der dritten Kunststoffplatte 25 verbunden ist, liegt gegenüber zu der Seitenkante der Kunststoffplatte 25, mit der diese mit der Sonnenkollektortafel 3 verbunden ist. Ebenso liegt die Seitenkante der Sonnenkollektortafel 3, an der diese mit der Bodenplatte 7 verbunden ist, gegenüber der Seitenkante 27 der Sonnenkollektortafel 3, mit der diese mit der dritten Kunststoffplatte 25 verbunden ist.

Die Bodenplatte 7 weist eine Knickkante 35 auf, die ebenfalls als Folienscharnier ausgebildet ist. In den Figuren 1. und 2 ist das Kleinkraftwerk in einer Stellung dargestellt, in der die dritte Kunststoffplatte in die zweite Position geklappt ist. Im Ausführungsbeispiel schließen die Ebenen, in der sich die dritte Kunststoffplatte 25 und die Sonnenkollektorplatte 3 erstrecken, einen Winkel α von 60° zwischen sich ein. Hierdurch ist die Sonnenkollektorplatte 3 in einem Winkel β von 60° schräg zum Untergrund U ausgerichtet, wenn die Sonnenkollektorplatte 3 über die dritte Kunststoffplatte 25 des Aufstellmittels auf dem Untergrund U aufgestellt ist.

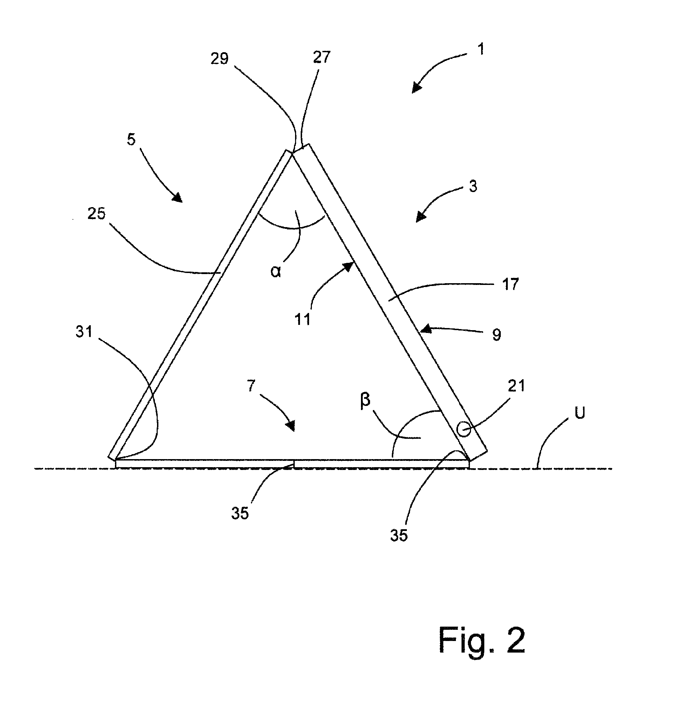

Die Bodenplatte 7 ist in den Darstellungen nach Figur 1 und 2 aufgeklappt und in dieser Position auf einen Untergrund U aufgelegt. Entsprechend sind die Sonnenkollektortafel 3 und das Aufstellmittel 5, dessen dritte Kunststoffplatte 25 sich in der zweiten Position befindet, auf der Bodenplatte 7 aufgestellt. Da die Sonnenkollektortafel 3 und die dritte Kunststoffplatte 25 über Folienscharniere fest mit der Bodenplatte verbunden sind, wirkt die Bodenplatte 7 als Feststellmittel, über die die Sonnenkollektortafel 3 sowie die dritte Kunststoffplatte 25 in einer festen Stellung zueinander angeordnet sind.

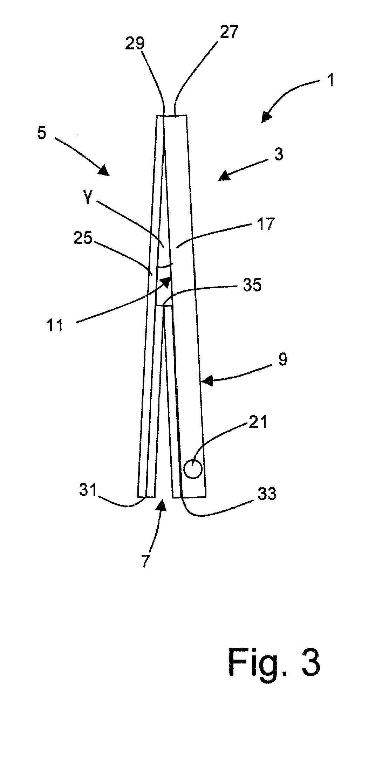

Figur 3 zeigt das Kleinkraftwerk gemäß den Figuren 1 und 2 flach ausgebildet. Dabei ist die dritte Kunststoffplatte 25 in die erste Position geklappt, so dass sie sich im wesentlichen in der Ebene erstreckt, in der sich die Sonnenkollektortafel erstreckt und beide Ebenen nur in einem γ von etwa 6° schräg zueinander verlaufen. Ferner ist die Bodenplatte 7 entlang der Knickkante 25 derart zusammengeklappt, dass sie sich ebenfalls im wesentlichen in der Ebene der dritten Kunststoffplatte und der Sonnenkollektortafel erstreckt.

Figur 3 zeigt anschaulich die Kompaktheit beziehungsweise flache Ausbildung des Kleinkraftwerkes 1, wenn die dritte Kunststoffplatte in die erste Position geklappt ist, so dass sich das Kleinkraftwerk 1 einfach und platzsparend transportieren lässt.

## Patentansprüche

1. Transportables solarthermisches Kleinkraftwerk mit folgenden Merkmalen:
1.1 einer Sonnenkollektortafel (3) zur Umwandlung von Sonnenlicht in Wärme, umfassend
1.1.1 eine erste Kunststoffplatte (9) und
1.1.2 eine zweite Kunststoffplatte (11), die derart beabstandet zur ersten Kunststoffplatte (9) angeordnet ist, dass ein Freiraum (15) zwischen der ersten und zweiten Kunststoffplatte (9, 11) ausgebildet ist, und
1.1.3 Mitteln zur Leitung eines Fluides (19), die in dem Freiraum (15) zwischen der ersten und zweiten Kunststoffplatte (9, 11) angeordnet sind;
1.2 einem Aufstellmittel (5) zur Aufstellung der Sonnenkollektortafel (3) auf einem Untergrund (U), umfassend
1.2.1 eine dritte Kunststoffplatte (25), die derart klappbar an der Sonnenkollektortafel (3) angeordnet ist, dass sie
1.2.1.1 in eine erste Position klappbar ist, in der das Kleinkraftwerk im wesentlichen flach ausgebildet ist, und dass sie
1.2.1.2 in eine zweite Position klappbar ist, in der sie derart von der Sonnenkollektortafel (3) weggeklappt ist, dass die Sonnenkol.lektortafel (3) bei Aufstellung auf einem Untergrund (U) in einer schrägen Stellung zum Untergrund (U) auf der dritten Kunststoffplatte (25) abstützbar ist.

2. Transportables Kleinkraftwerk nach Anspruch 1, bei dem sich die dritte Kunststoffplatte (25) in der ersten Position im wesentlichen in der Ebene erstreckt, in der sich die Sonnenkollektortafel (3) erstreckt.

3. Transportables Kleinkraftwerk nach wenigstens einem der vorhergehenden Ansprüche, bei dem das Aufstellmittel (5) in der zweiten Position feststellbar ist.

4. Transportables Kleinkraftwerk nach wenigstens einem der vorhergehenden Ansprüche, das mit weiteren Kleinkraftwerken nach wenigstens einem der vorhergehenden Ansprüche stapelbar ist, wenn die dritte Kunststoffplatte (25) jeweils in die erste Position geklappt ist.

5. Transportables Kleinkraftwerk nach wenigstens einem der vorhergehenden Ansprüche mit Mitteln zur Leitung eines Fluides in Form eines Schlauches (19).

6. Transportables Kleinkraftwerk nach wenigstens einem der vorhergehenden Ansprüche, umfassend ferner eine Bodenplatte (7), die auf einen Untergrund auflegbar ist und auf der die Sonnenkollektortafel (3) und das Aufstellmittel (5) aufstellbar sind, wenn die dritte Kunststoffplatte (25) in die zweite Position geklappt ist.

7. Transportables Kleinkraftwerk nach wenigstens einem der vorhergehenden Ansprüche, bei dem die erste Kunststoffplatte (9), die zweite Kunststoffplatte (11), die dritte Kunststoffplatte (25) und die Bodenplatte (7) als Kunststoffstrukturkammerplatten ausgebildet sind.
